# EUROPEAN PATENT SPECIFICATION

(11) **EP 1 234 945 B1**
(45) Date of publication and mention of the grant of the patent: **06.01.2010**
(21) Application number: 02251139.8
(22) Date of filing: 20.02.2002
(51) Int. Cl.: E06B 3/22, E06B 3/263

(54) **Window and door frames**
Fenster- und Türrahmen
Cadres de fenêtre et de porte

(30) Priority: 23.02.2001 GB 0104468
(43) Date of publication of application: 28.08.2002
(73) Proprietor: L.B. Plastics Limited, Belper, Derbyshire DE56 2JJ (GB)
(72) Inventor: Hardy, Terence, c/o L.B. Plastics Ltd, Nether Heage, Derbyshire DE56 2JJ (GB)
(74) Representative: Sales, Robert Reginald

(56) References cited:
- EP-A- 0 918 129
- DE-A- 3 616 444
- GB-A- 2 287 491
- US-A- 5 471 809
- PATENT ABSTRACTS OF JAPAN vol. 2000, no. 13, 5 February 2001 (2001-02-05) -& JP 2000 303743 A (TOKUYAMA CORP), 31 October 2000 (2000-10-31)

## Description

This invention relates to window and door frames and to components for use in the construction of window and door frames.

The thermal performance of new buildings is currently the focus of attention due to the need to conserve energy. One of the major losses of heat from buildings is through doors and particularly windows. Attention has therefore been focused on means of reducing heat loss through these components. In the case of windows attention has traditionally focused on the window glass and has resulted in the development of double and triple glazing and the use of special window glass. However plastic window frames formed from extruded components of hollow section also contribute to heat loss through windows since neither the plastic material nor the air entrapped within it is a particularly good thermal insulator. Moreover many such windows require to incorporate metal reinforcement to impart sufficient strength to the window frame, and heat loss through frames reinforced in this way is increased compared with unreinforced frames.

Various means have previously been proposed for improving the thermal performance of hollow plastic window and door frames whether incorporating reinforcement or not. One such proposal involves injection of foamed plastics material into the frame members to fill the cavities within them, see for example GB-A-2 287 491. While this results in improved thermal performance, it involves an additional injection operation and therefore complicates manufacture and increases cost. A further proposal involves the creation of increased numbers of cavities within the frame structure by increasing the number of internal walls. This serves to reduce air circulation within the frame and results in improved thermal performance. However the creation of multiple relatively small chambers within the frame components prevents incorporation of large size metal reinforcement and therefore limits the size and strength of frames which can be produced from such frame components. In addition the production of frame members incorporating multiple internal chambers increases the plastic material required to produce a frame of given dimensions. Moreover the production of frame members incorporating complex arrangements of internal walls greatly increases the complexity of the tooling required to manufacture the components. Both of the latter features consequently result in unacceptable increases in cost.

In constructing plastic window and door frames, extruded components of the kind referred to above are produced in length, cut to size and interconnected to produce frames presenting a number of openings into which glazing, fixed glazed inner frames or hinged inner frames may be mounted. Such frame components incorporate recesses or channels for accommodation of seals which generally comprise strips of rubberised material serving to prevent ingress of draughts or moisture when the windows or doors are in use. In the course of manufacture of such products, considerable quantities of off-cuts of frame material are generated. While the synthetic plastics material could be reused, the presence of the rubber seals contaminates material recycled in this way rendering it unsuitable for re-use, primarily due to discoloration. We have now found a means of utilising such material to improve the thermal performance of windows and doors.

According to one aspect of the invention there is provided a method of improving the thermal performance of a frame component of a window or door constructed from plastics material incorporating a metallic reinforcing member, the method comprising producing a coating material by reconstituting window or door frame components incorporating components of plastics material and of synthetic rubber, applying the coating material to a metal reinforcing member and inserting the coated reinforcing member into a cavity within the frame component.

The invention also provides a reinforcing member for use in reinforcing a plastic window or door frame component, the reinforcing member being insertable into a cavity in the frame component and comprising an elongated member of metal or metal alloy construction at least one surface of which is coated with a coating material derived from reconstituted window or door frame components incorporating components of plastics material and of synthetic rubber.

Preferably the reinforcing member is of hollow form, some at least of the outer and/or inner surfaces being coated with said coating material. Preferably said coating material extends over all the external surfaces of the reinforcing member. Alternatively or in addition the coating material may extend over all the internal surfaces of the reinforcing member or, where the reinforcing member is hollow, may fill the interior thereof.

Preferably the coating material comprises from 90 to 97 per cent by weight of plastics material and from 3 to 10 per cent by weight of synthetic rubber material. The proportions of plastics material to synthetic rubber will vary dependant on the nature of the recycled material from which the coating composition is produced. In one embodiment of the invention the coating material comprises approximately 95 per cent by weight of plastics material and approximately 5 per cent by weight of synthetic rubber material. Preferably the plastics material is polyvinylchloride (PVC).

The thickness of the coating is preferably between 1.0 mm. and 10.0 mm. The preferred coating thickness is in the region of 3 - 4 mm.

Preferably the metallic reinforcing member is formed from steel or aluminium. The reinforcing member is advantageously of U-shaped cross-section, the coating material extending around the base and sides of the U section and across the open end to form a continuous coating completely encasing the reinforcing member. Alternatively the reinforcing member may be of closed box section.

Preferably said cavity in the frame component occupies a substantial portion of a central region thereof, said coated reinforcing member being dimensioned to form a close fit within said cavity.

In a preferred form, the invention provides a component for use in the construction of a window frame or door frame comprising an elongated frame member of hollow plastics construction and a reinforcing member located within the frame member, the reinforcing member being of hollow metal or alloy construction the outer surface of which is coated with a coating material derived from reconstituted window or door frame components and comprising from 90 to 97 per cent of plastics material and from 3 to 10 per cent of synthetic rubber material, the thickness of the coating being at least 1.0 mm.

The invention also provides a window or door frame incorporating at least one component as aforesaid and a window or door incorporating such a frame.

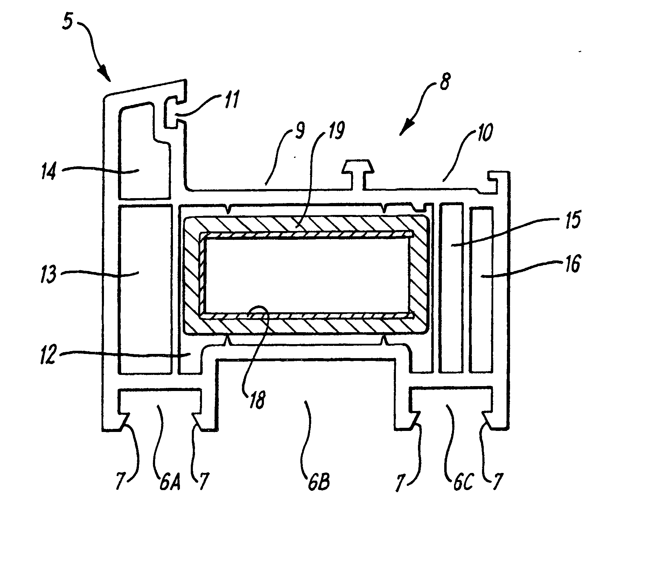

An embodiment of the invention will now be described, by way of example only, with reference to the accompanying drawing, which is a transverse cross-section through a window frame component according to the invention.

The drawing shows a window frame component formed from plastics material such as PVC by extrusion and of generally rectangular cross-section with an upstand 5 at one corner. The lower surface of the component as viewed in the drawing incorporates longitudinally extending channels 6A, 6B and 6C adapted to engage the brickwork or the like defining the window opening in which the window is to be installed. The channels 6A and 6C incorporate undercut formations 7 with which tie members (not shown) may be engaged to secure the frame to the surrounding brickwork.

The opposite or upper face of the component as viewed in the drawing defines a shelf 8, a central portion 9 of which is adapted to receive a glazing unit (generally a double glazing unit) and the outer portion 10 of which defines a longitudinally extending channel adapted to receive a glazing bead operable to retain the glazing unit in abutment with the upstand 5. A seal (not shown) may be incorporated in a recess 11 in the upstand 5 for abutment with the surface of the glazing unit retained in the channel 9. In use four such frame components are interconnected at right angles to one another to form a rectangular frame defining the assembled window.

The component incorporates a main internal cavity 12 and a plurality of secondary cavities 13, 14, 15 and 16. The main cavity 12 is adapted to house a reinforcing member serving to strengthen the frame component and thereby enable its use in the construction of windows of larger dimensions or in situations where the window frame is subjected to unusual stresses. In the illustrated embodiment the reinforcing member comprises an elongated component 18, generally formed of rolled steel or extruded aluminium, and of U-shaped cross-section. The component 18 is of lesser external dimensions than the cavity 12 and is surrounded by a coating 19 of an insulating material.

The coating 19 comprises a composition of plastics material and synthetic rubber derived from recycled window or door frame components. The preferred composition comprises around 95 per cent by weight of plastics material and around 5 per cent by weight of synthetic rubber material, but other proportions may be employed. It is preferred the synthetic rubber content should not exceed about 10 per cent.

The thickness of the coating is selected to provide the maximum degree of improved thermal performance consistent with the reinforcing member providing sufficient strength to withstand the stresses to which the window frame will be subjected in use. Preferably the coating is between 1.0 and 10.0 mm in thickness and ideally around 3 - 4 mm in thickness, although these thicknesses may vary dependent on the size and construction of the frame member and on the composition of the coating material itself, the thermal performance of which will vary dependant on the proportion of plastics material to rubber. A particular advantage of the plastics/rubber coating material is the ability to form coatings as thin as 1 mm, thus providing improved thermal insulation without substantially reducing the size, and hence the strength, of the reinforcing member itself.

By virtue of the arrangement described, a substantial improvement in thermal performance of the frame is attained compared with a frame of similar construction reinforced by a metal component not provided with a surrounding coating. Moreover the arrangement is particularly advantageous compared with previously proposed techniques for improving thermal performance of window and door frames by virtue of the fact that the coated reinforcing member can be simply produced separately from the frame component itself and inserted in essentially the same manner as an uncoated reinforcement. This also enables the thickness of the coating to be closely controlled and its integrity to be checked during production of the reinforcing member compared with techniques which involve injection of material into the frame component after the reinforcement has been inserted. Moreover the coated reinforcing member does not require any modification to be made to the frame component itself, but may be used with existing frame components to provide improved thermal performance compared with use of uncoated metal reinforcement.

A particular benefit of the invention arises from the use of reconstituted material which hitherto has had limited uses. Not only does this produce ecological benefits, but the application of the coating composition to the reinforcing member involves no increase in material cost. Consequently a substantial improvement in thermal performance of window or door frames constructed from components according to the invention may be achieved at minimum additional expense.

Various modifications may be made without departing from the invention. For example while in the embodiment the coating extends completely around the reinforcing member, it may be confined to certain surfaces only. The thickness and composition of the coating may also be varied and the reinforcing member itself may be of different cross-sectional shape, size and wall thickness. Moreover while in the embodiment a single reinforcing member is incorporated in the frame component, more than one coated reinforcing member could be incorporated in certain frame structures if required.

While reference has been made primarily to frame components constructed from PVC and to steel or aluminium reinforcing members, the invention is applicable to window or door frames constructed from other plastics materials and to reinforcing members of different metals or alloys. Moreover while in the illustrated embodiment the coating is confined to the outer surface of the reinforcing member, it could instead, or in addition, be applied to the inner surface or fill the whole of the interior of the reinforcing member. The reinforcing member itself may be of closed box section and could be corrugated or otherwise strengthened to compensate for the reduction in size of the reinforcing member itself resulting from application of the coating to its outer surface. Moreover while primarily described with reference to the production of window frames, the invention is equally applicable in relation to door frames or reinforced plastic components employed for other purposes.

## Claims

1. A method of improving the thermal performance of a frame component (8) of a window or door constructed from plastics material incorporating a metallic reinforcing member (18), **characterised by** the steps of producing a coating material (19) by reconstituting window or door frame components incorporating components of plastics material and of synthetic rubber, applying the coating material (19) to a metal reinforcing member (18) and inserting the coated reinforcing member into a cavity (12) within the frame component (8).

2. A method according to claim 1 **characterised in that** the coating material (19) is applied to at least some of the external surface of the reinforcing member (18).

3. A method according to claim 1 or 2 **characterised in that** the reinforcing member (18) is of hollow form and the coating material (19) is applied to at least some of the internal surface of the reinforcing member.

4. A method according to claim 1 or 2 **characterised in that** the reinforcing member (18) is of hollow form and sufficient coating material (19) is applied to fill the interior of the reinforcing member.

5. A method according to any preceding claim **characterised in that** the coating material (19) comprises from 90 to 97 per cent by weight of plastics material and from 3 to 10 per cent by weight of synthetic rubber material.

6. A method according to any of claims 1 to 3 or claim 5 when dependent from any of claims 1 to 3 **characterised in that** the coating (19) is between 1.0 mm and 10.0 mm thick.

7. A method according to any preceding claim **characterised in that** the plastics material is polyvinylchloride (PVC).

8. A frame component for a window or door **characterised in that** it is produced by the method of any of the preceding claims.

9. A window or door frame **characterised in that** it incorporates at least one frame component (8) according to claim 8.

10. A reinforcing member (18, 19) for use in reinforcing a plastics material window or door frame component (8) to provide improved thermal performance, the reinforcing member (18,19) being insertable into a cavity (12) in the frame component (8) and comprising an elongated member (18) of metal or metal alloy construction **characterised in that** at least one surface of the reinforcing member (18,19) is coated with a coating material (19) derived from reconstituted window or door frame components incorporating components of plastics material and of synthetic rubber.

11. A reinforcing member according to claim 10 **characterised in that** it is of hollow form, some at least of the outer and/or inner surfaces being coated with said coating material (19).

12. A reinforcing member according to claim 10 or 11 **characterised in that** said coating material (19) extends over all the external surfaces of the reinforcing member (18).

13. A reinforcing member according to claim 11 or 12 **characterised in that** the coating material (19) extends over all the internal surfaces of the reinforcing member (18).

14. A reinforcing member according to claim 11 or 12 **characterised in that** the coating material (19) fills the interior of the reinforcing member (18).

15. A reinforcing member according to any of claims 10 to 14 **characterised in that** the coating material (19) comprises from 90 to 97 per cent by weight of plastics material and from 3 to 10 per cent by weight of synthetic rubber material.

16. A reinforcing member according to claim 15 **characterised in that** said coating material (19) comprises approximately 95 per cent by weight of plastics material and approximately 5 per cent by weight of synthetic rubber material.

17. A reinforcing member according to any of claims 10 to 16 **characterised in that** the thickness of the coating (19) is between 1.0 mm and 10.0 mm thick.

18. A reinforcing member according to claim 17 **characterised in that** the thickness of the coating (19) is in the region of 3 to 4 mm thick.

19. A reinforcing member according to any of claims 10 to 18 **characterised in that** the reinforcing member (18) is formed from steel or from aluminium.

20. A reinforcing member according to claim 10 **characterised in that** the reinforcing member (18) is of U-shaped cross-section, the coating material (19) extending around the base and sides of the U section and across the open end to form a continuous coating completely encasing the reinforcing member.

21. A reinforcing member according to any of claims 10 to 19 **characterised in that** it is of closed box section.

22. A window or door component comprising a cavity (12) **characterised in that** it incorporates in said cavity (12) a reinforcing member (18) according to any of claims 10 to 21.

23. A window or door component according to claim 22 **characterised in that** said cavity (12) in the frame component (8) occupies a substantial portion of a central region thereof, said coated reinforcing member (18, 19) being dimensioned to form a close fit within said cavity (12).

24. A component for use in the construction of a window frame or door frame comprising an elongated frame member (8) of hollow plastics construction and a reinforcing member (18) located within the frame member, the reinforcing member (18) being of hollow metal or alloy construction, **characterised in that** the outer surface of the reinforcing member (18) is coated with a coating material (19) derived from reconstituted window or door frame components and comprising from 90 to 97 per cent of plastics material and from 3 to 10 per cent of synthetic rubber material, the thickness of the coating (19) being at least 1.0 mm.

25. A window frame or door frame **characterised in that** it incorporates at least one component (8) according to claim 24.

26. A window or door **characterised in that** it incorporates a frame according to claim 2 5.

## Patentansprüche

1. Verfahren zum Verbessern der thermischen Eigenschaften einer Rahmenkomponente (8) eines Fensters oder einer Tür, wobei die Rahmenkomponente aus einem Kunststoffmaterial aufgebaut ist, das ein Verstärkungsglied (18) aus Metall enthält, **gekennzeichnet durch** folgende Schritte:
- Herstellen eines Beschichtungsmaterials (19) **durch** Wiederherstellen von Komponenten von Fenster- oder Türrahmen, welche Komponenten aus Kunststoffmaterial und aus Synthesekautschuk enthalten;
- Auftragen des Beschichtungsmaterials (19) auf ein Verstärkungsglied (18) aus Metall; und
- Einfügen des beschichteten Verstärkungsglieds in einen Hohlraum (12) innerhalb der Rahmenkomponente (8).

2. Verfahren nach Anspruch 1, **dadurch gekennzeichnet, dass** das Beschichtungsmaterial (19) auf mindestens einen Teil der äußeren Oberfläche des Verstärkungsglieds (18) aufgetragen wird.

3. Verfahren nach Anspruch 1 oder 2, **dadurch gekennzeichnet, dass** das Verstärkungsglied (18) eine hohle Form hat und das Beschichtungsmaterial (19) auf mindestens einen Teil der inneren Oberfläche des Verstärkungsglieds aufgetragen wird.

4. Verfahren nach Anspruch 1 oder 2, **dadurch gekennzeichnet, dass** das Verstärkungsglied (18) eine hohle Form hat und ausreichend viel Beschichtungsmaterial (19) aufgetragen wird, um das Innere des Verstärkungsglieds zu füllen.

5. Verfahren nach einem der vorhergehenden Ansprüche, **dadurch gekennzeichnet, dass** das Beschichtungsmaterial (19) 90 bis 97 Gew.% Kunststoffmaterial und 3 bis 10 Gew.% Synthesekautschuk-Material enthält.

6. Verfahren nach einem der Ansprüche 1 bis 3 oder nach Anspruch 5 bei Abhängigkeit von einem der Ansprüche 1 bis 3, **dadurch gekennzeichnet, dass** die Beschichtung (19) zwischen 1.0 mm und 10.0 mm dick ist.

7. Verfahren nach einem der vorhergehenden Ansprüche, **dadurch gekennzeichnet, dass** das Kunststoffmaterial Polyvinylchlorid (PVC) ist.

8. Rahmenkomponente für ein Fenster oder eine Tür, **dadurch gekennzeichnet, dass** die Rahmenkomponente durch das Verfahren nach einem der vorhergehenden Ansprüche hergestellt ist.

9. Fenster- oder Türrahmen, **dadurch gekennzeichnet, dass** er mindestens eine Rahmenkomponente nach Anspruch (8) enthält.

10. Verstärkungsglied (18, 19) zur Verwendung beim Verstärken einer Komponente (8) aus Kunststoffmaterial für Fenster- oder Türrahmen, um verbesserte thermische Eigenschaften zu erzeugen, wobei das Verstärkungsglied (18, 19) in einen Hohlraum (12) in der Rahmenkomponente (8) einfügbar ist und ein längliches Glied (18) aus einer Konstruktion aus Metall oder Metall-Legierung aufweist, **dadurch gekennzeichnet, dass** mindestens eine Oberfläche des Verstärkungsglieds (18, 19) mit einem Beschichtungsmaterial (19) beschichtet ist, welches ein Derivat aus wiederhergestellten Komponenten von Fenster- oder Türrahmen ist und Komponenten aus Kunststoffmaterial und aus Synthesekautschuk enthält.

11. Verstärkungsglied nach Anspruch 10, **dadurch gekennzeichnet, dass** es eine hohle Form hat, wobei mindestens ein Teil der äußeren und/oder inneren Oberflächen mit dem Beschichtungsmaterial (19) beschichtet sind.

12. Verstärkungsglied nach Anspruch 10 oder 11, **dadurch gekennzeichnet, dass** sich das Beschichtungsmaterial (19) über die gesamten äußeren Oberflächen des Verstärkungsglieds (18) erstreckt.

13. Verstärkungsglied nach Anspruch 11 oder 12, **dadurch gekennzeichnet, dass** sich das Beschichtungsmaterial (19) über die gesamten inneren Oberflächen des Verstärkungsglieds (18) erstreckt.

14. Verstärkungsglied nach Anspruch 11 oder 12, **dadurch gekennzeichnet, dass** das Beschichtungsmaterial (19) das Innere des Verstärkungsglieds (18) füllt.

15. Verstärkungsglied nach einem der Ansprüche 10 bis 14, **dadurch gekennzeichnet, dass** das Beschichtungsmaterial (19) 90 bis 97 Gew.% Kunststoffmaterial und 3 bis 10 Gew.% Synthesekautschuk-Material enthält.

16. Verstärkungsglied nach Anspruch 15, **dadurch gekennzeichnet, dass** das Beschichtungsmaterial (19) etwa 95 Gew.% Kunststoffmaterial und etwa 5 Gew.% Synthesekautschuk-Material enthält.

17. Verstärkungsglied nach einem der Ansprüche 10 bis 16, **dadurch gekennzeichnet, dass** die Beschichtung (19) zwischen 1.0 mm und 10.0 mm dick ist.

18. Verstärkungsglied nach Anspruch 17, **dadurch gekennzeichnet, dass** die Dicke der Beschichtung (19) im Bereich von 3 bis 4 mm liegt.

19. Verstärkungsglied nach einem der Ansprüche 10 bis 18, **dadurch gekennzeichnet, dass** das Verstärkungsglied (18) aus Stahl oder aus Aluminium gebildet ist.

20. Verstärkungsglied nach Anspruch 10, **dadurch gekennzeichnet, dass** das Verstärkungsglied (18) einen U-förmigen Querschnitt hat, wobei sich das Beschichtungsmaterial (19) um die Basis und die Seiten des U-Schnitts und über das offene Ende erstreckt, um eine durchgehende Beschichtung zu bilden, die das Verstärkungsglied vollständig umschließt.

21. Verstärkungsglied nach einem der Ansprüche 10 bis 19, **dadurch gekennzeichnet, dass** es aus einem abgeschlossenen Kastenabschnitt besteht.

22. Fenster- oder Türkomponente, welche einen Hohlraum (12) aufweist, **dadurch gekennzeichnet, dass** sie in diesem Hohlraum (12) ein Verstärkungsglied (18) nach einem der Ansprüche 10 bis 21 enthält.

23. Fenster- oder Türkomponente nach Anspruch 22, **dadurch gekennzeichnet, dass** der Hohlraum (12) in der Rahmenkomponente (8) einen wesentlichen Anteil eines mittigen Bereichs davon belegt, wobei das beschichtete Verstärkungsglied (18, 19) derart dimensioniert ist, dass es innerhalb des Hohlraums (12) eng anliegt.

24. Komponente zur Verwendung beim Bau eines Fensterrahmens oder Türrahmens, welche ein aus einem hohlen Kunststoff aufgebautes längliches Rahmenglied (8) und ein innerhalb des Rahmenglieds angeordnetes Verstärkungsglied (18) aufweist, wobei das Verstärkungsglied (18) einen hohlen Aufbau aus Metall oder Legierung hat, **dadurch gekennzeichnet, dass** die äußere Oberfläche des Verstärkungsglieds (18) mit einem Beschichtungsmaterial (19) beschichtet ist, welches ein Derivat aus wiederhergestellten Komponenten von Fenster- oder Türrahmen ist und 90 bis 97 Gew.% Kunststoffmaterial und 3 bis 10 Gew.% Synthesekautschuk-Material enthält, wobei die Dicke der Beschichtung (19) mindestens 1.0 mm beträgt.

25. Fensterrahmen oder Türrahmen, **dadurch gekennzeichnet, dass** er mindestens eine Komponente (8) nach Anspruch 24 enthält.

26. Fenster oder Tür, **dadurch gekennzeichnet, dass** das Fenster oder die Tür einen Rahmen nach Anspruch 25 enthält.

## Revendications

1. Procédé pour améliorer la performance thermique d'un composant de châssis (8) d'une fenêtre ou d'une porte construit à partir de matière plastique comprenant un élément de renforcement métallique (18), **caractérisé par** les étapes consistant à produire un matériau de revêtement (19) en reconstituant les composants de châssis de fenêtre ou de porte incorporant des composants de matière plastique et de caoutchouc synthétique, appliquer le matériau de revêtement (19) sur un élément de renforcement métallique (18) et insérer l'élément de renforcement recouvert dans une cavité (12) à l'intérieur du composant de châssis (8).

2. Procédé selon la revendication 1, **caractérisé en ce que** le matériau de revêtement (19) est appliqué sur au moins une partie de la surface externe de l'élément de renforcement (18).

3. Procédé selon la revendication 1 ou 2, **caractérisé en ce que** l'élément de renforcement (18) a une forme creuse et le matériau de revêtement (19) est appliqué au moins sur une partie de la surface interne de l'élément de renforcement.

4. Procédé selon la revendication 1 ou 2, **caractérisé en ce que** l'élément de renforcement (18) a une forme creuse et suffisamment matériau de revêtement (19) est appliqué pour remplir l'intérieur de l'élément de renforcement.

5. Procédé selon l'une quelconque des revendications précédentes, **caractérisé en ce que** le matériau de revêtement (19) comprend de 90 à 97 pourcent en poids de matière plastique et de 3 à 10 pourcent en poids de caoutchouc synthétique.

6. Procédé selon l'une quelconque des revendications 1 à 3 ou la revendication 5 lorsqu'elle dépend de l'une quelconque des revendications 1 à 3, **caractérisé en ce que** le revêtement (19) a une épaisseur comprise entre 1,0 mm et 10,0 mm.

7. Procédé selon l'une quelconque des revendications précédentes, **caractérisé en ce que** la matière plastique est du polychlorure de vinyle (PVC).

8. Composant de châssis pour une fenêtre ou une porte, **caractérisé en ce qu'**il est produit par le procédé selon l'une quelconque des revendications précédentes.

9. Châssis de fenêtre ou de porte, **caractérisé en ce qu'**il comprend au moins un composant de châssis (8) selon la revendication 8.

10. Elément de renforcement (18, 19) destiné à être utilisé pour renforcer un composant de châssis de fenêtre ou de porte (8) en matière plastique afin de fournir une performance thermique améliorée, l'élément de renforcement (18, 19) pouvant être inséré dans une cavité (12) dans le composant de châssis (8) et comprenant un élément allongé (18) de construction métallique ou en alliage métallique, **caractérisé en ce qu'**au moins une surface de l'élément de renforcement (18, 19) est recouverte avec un matériau de revêtement (19) dérivé des composants de châssis de fenêtre ou de porte reconstitués incorporant des composants de matière plastique et de caoutchouc synthétique.

11. Elément de renforcement selon la revendication 10, **caractérisé en ce qu'**il a une forme creuse, une certaine partie d'au moins les surfaces externes et/ou internes étant recouverte avec ledit matériau de revêtement (19).

12. Elément de renforcement selon la revendication 10 ou 11, **caractérisé en ce que** ledit matériau de revêtement (19) s'étend sur toutes les surfaces externes de l'élément de renforcement (18).

13. Elément de renforcement selon la revendication 11 ou 12, **caractérisé en ce que** le matériau de revêtement (19) s'étend sur toutes les surfaces internes de l'élément de renforcement (18).

14. Elément de renforcement selon la revendication 11 ou 12, **caractérisé en ce que** le matériau de revêtement (19) remplit l'intérieur de l'élément de renforcement (18).

15. Elément de renforcement selon l'une quelconque des revendications 10 à 14, **caractérisé en ce que** le matériau de renforcement (19) comprend de 90 à 97 pourcent en poids de matière plastique et de 3 à 10 pourcent en poids de caoutchouc synthétique.

16. Elément de renforcement selon la revendication 15, **caractérisé en ce que** le matériau de revêtement (19) comprend approximativement 95 pourcent en poids de matière plastique et approximativement 5 pourcent en poids de caoutchouc synthétique.

17. Elément de renforcement selon l'une quelconque des revendications 10 à 16, **caractérisé en ce que** l'épaisseur du revêtement (19) est comprise entre 1,0 mm et 10,0 mm.

18. Elément de renforcement selon la revendication 17, **caractérisé en ce que** l'épaisseur du revêtement (19) est dans une région de 3 à 4 mm d'épaisseur.

19. Elément de renforcement selon l'une quelconque des revendications 10 à 18, **caractérisé en ce que** l'élément de renforcement (18) est formé à partir d'acier ou à partir d'aluminium.

20. Elément de renforcement selon la revendication 10, **caractérisé en ce que** l'élément de renforcement (18) a une section transversale en forme de U, le matériau de revêtement (19) s'étendant autour de la base et des côtés de la section en forme de U et sur l'extrémité ouverte afin de former un revêtement continu enveloppant complètement l'élément de renforcement.

21. Elément de renforcement selon l'une quelconque des revendications 10 à 19, **caractérisé en ce qu'**il a une section de caisson fermée.

22. Composant de fenêtre ou de porte comprenant une cavité (12) **caractérisé en ce qu'**il comprend dans ladite cavité (12), un élément de renforcement (18) selon l'une quelconque des revendications 10 à 21.

23. Composant de fenêtre ou de porte selon la revendication 22, **caractérisé en ce que** ladite cavité (12) dans le composant de châssis (8) occupe une partie sensible de sa région centrale, ledit élément de renforcement recouvert (18, 19) étant dimensionné afin de former un ajustement serré à l'intérieur de ladite cavité (12).

24. Composant destiné à être utilisé dans la construction d'un châssis de fenêtre ou d'un châssis de porte comprenant un élément de châssis allongé (8) avec une construction de plastique creuse et un élément de renforcement (18) situé à l'intérieur de l'élément de châssis, l'élément de renforcement (18) étant réalisé avec une construction métallique creuse ou d'alliage creuse, **caractérisé en ce que** la surface externe de l'élément de renforcement (18) est recouverte avec un matériau de revêtement (19) dérivé des composants de châssis de fenêtre ou de porte reconstitués et comprenant de 90 à 97 pourcent de matière en plastique et de 3 à 10 pourcent de caoutchouc synthétique, l'épaisseur du revêtement 19 étant d'au moins 1,0 mm.

25. Châssis de fenêtre ou châssis de porte **caractérisé en ce qu'**il comprend au moins un composant (8) selon la revendication 24.

26. Fenêtre ou porte **caractérisée en ce qu'**elle comprend un châssis selon la revendication 25.
